# EUROPÄISCHE PATENTSCHRIFT

(11) **EP 1 334 797 B1**
(45) Veröffentlichungstag und Bekanntmachung des Hinweises auf die Patenterteilung: **04.05.2005**
(21) Anmeldenummer: 03000937.7
(22) Anmeldetag: 16.01.2003
(51) Int. Cl.: B23P 21/00, B23Q 1/00, B23Q 39/04

(54) **Montagemaschine**
Assembling machine
Machine d'assemblage

(30) Priorität: 06.02.2002 DE 10204965
(43) Veröffentlichungstag der Anmeldung: 13.08.2003
(73) Patentinhaber: AKB Automationskomponenten und Basismaschinen GmbH & Co.KG, 37308 Heiligenstadt (DE)
(72) Erfinder: Budig, Peter-Klaus Prof.Dr.sc.techn.Dr.h.c., 19122 Chemnitz (DE); Weis, Wolfgang Dipl.-Ing., 72654 Neckartenzlingen (DE); Diederich, Otto Dr.-Ing., 37308 Heiligenstadt (DE); Döring, Jörg Dipl.-Ing.(FH), 37308 Heiligenstadt (DE); Franke, Mario Dipl.-Ing., 34359 Reinhardshagen (DE)
(74) Vertreter: Albrecht, Rainer Harald, Dr.-Ing.

(56) Entgegenhaltungen:
- EP-A- 0 615 813
- DE-A- 4 230 785
- DE-A- 4 328 988
- DE-A- 19 842 999

## Beschreibung

Die Erfindung betrifft eine Montagemaschine mit
einem Maschinengestell,
einer Mehrzahl von Arbeitsstationen, die auf einer an der Oberseite des Maschinengestells befestigten kreisförmigen Trägerplatte angeordnet sind, und
einem taktweise rotierend angetriebenen Drehteller, der konzentrisch zur Trägerplatte angeordnet ist,
wobei der Drehteller am Umfang der Trägerplatte vorsteht und eine die Trägerplatte ringförmig umgebende Auflagefläche für Werkstücke bildet. Eine solche Montagemaschine ist aus dem nächstliegenden Stand der Technik DE-A 43 28 988 bekannt.

Bei der aus DE-A 43 28 988 bekannten Montagemaschine, von der die Erfindung ausgeht, ist das Maschinengestell als Schweißkonstruktion ausgebildet und ist als Drehtellerantrieb ein elektromechanischer Antrieb mit einem Rastschrittgetriebe vorgesehen. Das Rastschrittgetriebe mit aufsitzendem Drehteller bildet eine eigenständige Baugruppe. Dabei muss das Rastschrittgetriebe nach Maßgabe des Drehtellerdurchmessers und in Abhängigkeit der Anzahl der Arbeitsstationen bzw. der Schrittweite, die in einem Arbeitstakt von dem Drehteller zurückgelegt werden soll, unterschiedlich ausgelegt werden. Da die Montagemaschine hinsichtlich des Drehtellerdurchmessers und der Anzahl der Arbeitsstationen auf Anwendungen genau abgestimmt werden muss, kann mit der Fertigung einer Montagemaschine erst begonnen werden, wenn die anwendungsseitigen Spezifikationen festliegen. Dadurch ergeben sich in der Praxis häufig relativ lange Lieferzeiten.

Ausgehend von dieser Problematik liegt der Erfindung die Aufgabe zugrunde, eine Basismontagemaschine auszubilden, die in Bezug auf die Größe des Drehtellers, sowie der Schrittweite eines Arbeitstaktes variabel an unterschiedliche Aufgaben angepasst werden kann, ohne dass an dem Maschinengestell oder an dem Drehtellerantrieb konstruktive Änderungen erforderlich sind.

Ausgehend von einer Montagemaschine des eingangs beschriebenen Aufbaus wird die Aufgabe erfindungsgemäß dadurch gelöst,
dass das Maschinengestell als Gussteil ausgebildet ist, welches einen tischförmigen Unterbau und eine oberseitige Konsole mit einer ringförmigen Montagefläche für einen Drehtellerantrieb aufweist, und
dass der Drehtellerantrieb als elektrischer Direktantrieb ausgebildet ist, der einen an der Montagefläche befestigten ringförmigen Stator mit elektrischen Wicklungen und einen mit Permanent-Magneten bestückten Rotor aufweist,
wobei der Rotor einen Träger für den Drehteller bildet und lösbar mit diesem verbunden ist. Das als Gussteil ausgebildete Maschinengestell und der Drehtellerantrieb bilden eine funktionsmäßige Einheit im Sinne einer vorfertigbaren Baugruppe. Dabei macht sich die Erfindung zunutze, dass das Gussteil eine hohe Formsteifigkeit besitzt und die Montagefläche zur Aufnahme des Drehtellerantriebes präzise bearbeitet werden kann. Der Rotor des auch als Torque-Motor bezeichneten elektrischen Direktantriebes stützt den Drehteller auf einer ringförmigen Stützfläche von großem Durchmesser. Dadurch sind Kippbewegungen des Drehtellers ausgeschlossen. Es können ohne weiteres unterschiedlich große Drehteller aufgesetzt werden, ohne dass eine funktionsmäßige Beeinträchtigung zu befürchten ist. Die Teilung des Drehtellers und die Geschwindigkeit der Drehbewegung werden durch die Programmierung des Torque-Motors bestimmt und sind für jeden Einsatzfall durch entsprechende Änderung der Steuersoftware variabel anpassbar. Es sind auch Drehtischteilungen möglich, die bei einem mechanischen Antrieb aus konstruktiven Gründen ausgeschlossen sind.

Der Stator des elektrischen Direktantriebes kann optional einen segmentierten Aufbau aufweisen. Ferner kann eine mechanische Klemmung oder Bremse vorgesehen sein, damit der Drehteller sich nicht bewegen kann, wenn auf dem Drehteller positionierte Werkstücke an den Arbeitsstationen bearbeitet werden.

Der tischförmige Unterbau des Gussteils weist vorzugsweise zwei seitliche Wangen auf, die auf einer bodenseitigen Grundplatte befestigt sind. Das Gussteil kann sowohl aus Gewichtsgründen, als auch zur Verbesserung der Zugänglichkeit fensterförmige Aussparungen enthalten. Auf dem tischförmigen Unterbau ist zweckmäßig eine Arbeitsplatte zur Befestigung von Zusatz- und Zuführeinrichtungen angeordnet. Gemäß einer bevorzugten Ausführung der Erfindung sind die Trägerplatte und der Drehteller ferner als Ringscheiben ausgebildet und sind innerhalb des tischförmigen Unterbaus Antriebe und Steuereinrichtungen zur Betätigung von Montagewerkzeugen in den Arbeitsstationen angeordnet. Leitungen zur Steuerung der Montagewerkzeuge können durch den Freiraum der Trägerplatte und des Drehtellers zu den Arbeitsstationen geführt werden.

Gemäß einer bevorzugten Ausführung der Erfindung besteht der Rotor des als Drehtellerantriebes eingesetzten Torque-Motors aus einem mit Permanent-Magneten bestückten Lagerring eines an der Montagefläche angeordneten Wälzlagers. Das Wälzlager weist einen an dem Montagering festgelegten Lagerring, Wälzkörper und einen den Rotor bildenden beweglichen Lagerring auf und kann als Zulieferteil mit hoher Präzision gefertigt werden.

Gemäß einer besonders bevorzugten Ausführung der Erfindung ist der Stator als Außenring ausgebildet, an dessen innenseitiger Umfangsfläche elektrische Wicklungen angeordnet sind. Der den Rotor bildende Wälzlagerring ist Bestandteil eines innerhalb des Außenringes und zu diesem konzentrisch auf der Montagefläche angeordneten Wälzlagers. Der Außenring kann einteilig oder aus Segmenten aufgebaut sein. In weiterer Ausgestaltung lehrt die Erfindung, dass der Stator von außen zugängliche Kühlkanäle aufweist und dass am Außenring eine Dichtung angeordnet ist, die einen Spalt zwischen dem Stator und dem Drehteller abdichtet. Bei der beschriebenen Ausführung mit einem als Außenring ausgebildeten Stator, insbesondere mit einer zusätzlichen Abdichtung gegenüber dem Drehteller, ist das Wälzlager gegen Verschmutzung geschützt. Die Ausführung eignet sich auch für Reinraumanwendungen, z. B. in der Medizintechnik. Die Trägerplatte für die Arbeitsstationen kann auf dem fest auf der Montagefläche angeordneten Innenring des Wälzlagers aufliegen und an diesem befestigt werden. Die Anordnung zeichnet sich durch einen sehr einfachen konstruktiven Aufbau aus.

Im Folgenden wird die Erfindung anhand einer lediglich ein Ausführungsbeispiel darstellenden Zeichnung erläutert. Es zeigen schematisch
- Fig. 1: eine Montagemaschine in perspektivischer Darstellung,
- Fig. 2: ein als Gussteil ausgebildetes Maschinengestell der in Fig. 1 dargestellten Montagemaschine,
- Fig. 3: ausschnittsweise einen Schnitt durch den oberen Bereich der in Fig. 1 dargestellten Montagemaschine.

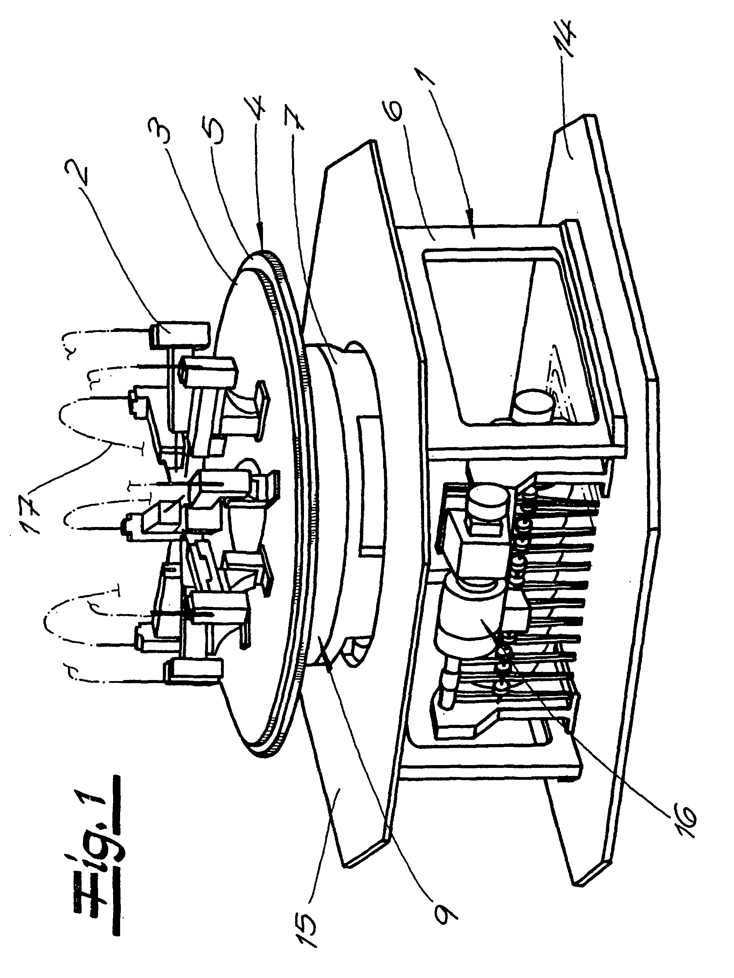

Zum grundsätzlichen Aufbau der in Fig. 1 dargestellten Montagemaschine gehören ein Maschinengestell 1, eine Mehrzahl von Arbeitsstationen 2, die auf einer an der Oberseite des Maschinengestells 1 befestigten kreisförmigen Trägerplatte 3 angeordnet sind, und ein taktweise rotierend angetriebener Drehteller 4, der konzentrisch zur Trägerplatte angeordnet ist. Der Drehteller 4 steht am Umfang der Trägerplatte vor und bildet eine die Trägerplatte 3 ringförmig ungebende Auflagefläche 5 für Werkstücke.

Das Maschinengestell 1 ist als Gussteil ausgebildet, welches einen tischförmigen Unterbau 6 und eine oberseitige Konsole 7 mit einer ringförmigen Montagefläche 8 für einen Drehtellerantrieb 9 aufweist. Der Drehtellerantrieb 9 besteht aus einem Torque-Motor, also einem elektrischen Direktantrieb, der einen an der Montagefläche 8 befestigten ringförmigen Stator 10 mit elektrischen Wicklungen 11 und einen mit Permanent-Magneten 12 bestückten Rotor 13 aufweist. Der Rotor 13 bildet einen Träger für den Drehteller 4 und ist lösbar mit diesem verbunden. Das als Gussteil ausgebildete Maschinengestell 1 und der auf dem Gussteil angeordnete Torque-Motor 9 bilden eine Basismontagemaschine, an der durch Austausch des Drehtellers 4 sowie der Trägerplatte 3 für die Arbeitsstationen 2 anwendungsbezogene Anpassungen vorgenommen werden können.

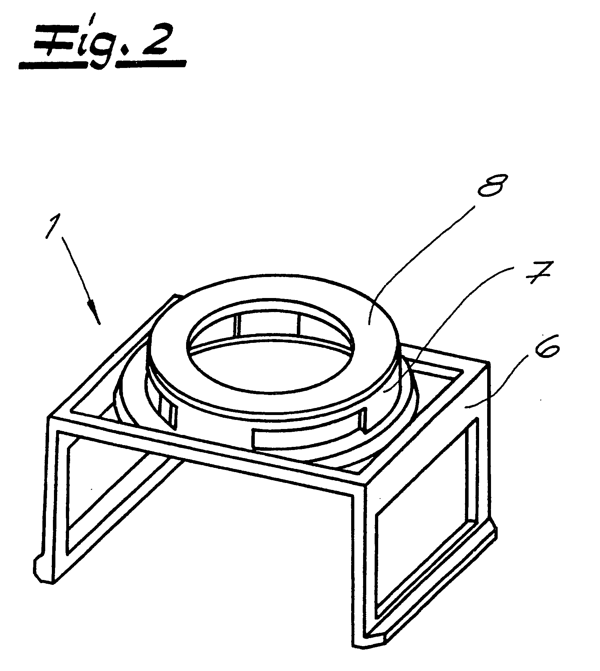

Einer vergleichenden Betrachtung der Fig. 1 und 2 entnimmt man, dass der tischförmige Unterbau 6 des Gussteils zwei seitliche Wangen aufweist, die auf einer bodenseitigen Grundplatte 14 befestigt sind, und dass das Gussteil fensterförmige Aussparungen enthält. Auf dem tischförmigen Unterbau 6 ist eine Arbeitsplatte 15 zur Befestigung von Zusatz- und Zuführeinrichtungen angeordnet. Innerhalb des tischförmigen Unterbaus 6 sind Antriebe und Steuereinrichtungen 16 zur Betätigung von Montagewerkzeugen in den Arbeitsstationen 2 angeordnet und über Leitungen 17 an die Montagewerkzeuge der Arbeitsstationen 2 angeschlossen. Die Trägerplatte 3 und der Drehteller 4 sind als Ringscheiben ausgebildet, so dass die Leitungen 17 durch den Freiraum gebündelt den Arbeitsstationen 2 zugeführt werden können. Die innerhalb des tischförmigen Unterbaus angeordneten Antriebe und Steuereinrichtungen 16 können in an sich bekannter Weise eine Steuerwelle mit aufgesetzten, den einzelnen Arbeitsstationen 2 zugeordnete Kurvenscheiben aufweisen, deren Profil abgegriffen und als Stellsignal mittels Bowdenzügen auf die Montagewerkzeuge übertragen wird.

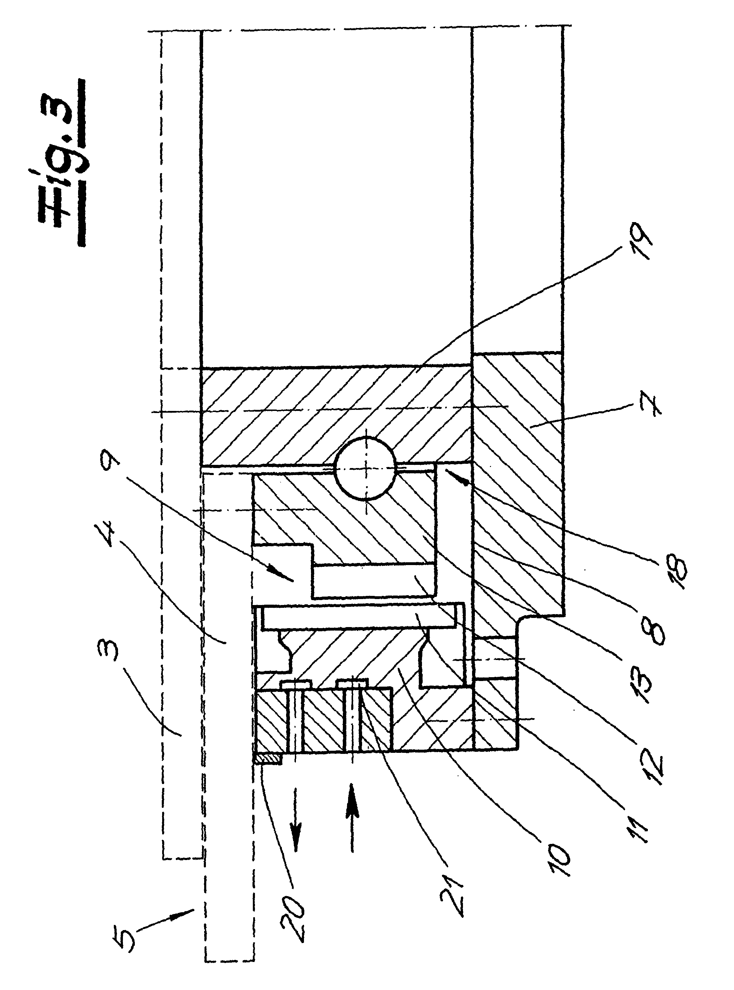

Gemäß einem bevorzugten und in Fig. 3 dargestellten Ausführungsbeispiel besteht der Rotor 13 des Drehtellerantriebes 9 aus einem mit Permanent-Magneten 12 bestückten Lagerring eines an der Montagefläche 8 des Gussteils angeordneten Wälzlagers 18. Der Stator 10 ist als Außenring ausgebildet, an dessen innenseitiger Umfangsfläche elektrische Wicklungen 11 angeordnet sind. Es versteht sich, dass der Stator 10 bzw. Außenring auch einen segmentierten Aufbau aufweisen kann. Der den Rotor 13 bildende Wälzlagerring ist Bestandteil des innerhalb des Außenringes 10 und zu diesem konzentrisch auf der Montagefläche 8 angeordneten Wälzlagers 18. Die Trägerplatte 3 für die Arbeitsstationen 2 kann auf dem fest auf der Montagefläche 8 angeordneten Innenring 19 des Wälzlagers 18 aufliegen und an diesem befestigt werden.

Der den Stator 10 bildende Außenring schützt das Wälzlager 18 vor Verschmutzungen. Falls erforderlich, kann am Außenring 10 zusätzlich eine Dichtung 20 angeordnet werden, die einen Spalt zwischen dem Stator 10 und dem Drehteller 4 abdichtet. Bei der in Fig. 3 dargestellten Anordnung ist auch eine sehr einfache Kühlung des Torque-Motors möglich. Zu diesem Zweck weist der Stator 10 von außen zugängliche Kühlkanäle 21 auf.

Die getakteten Stellbewegungen des Torque-Motors werden von einer nicht dargestellten Steuerung gesteuert. Durch die Steuersoftware sind die Stellbewegungen variabel an den konkreten Anwendungsfall anpassbar. Der Torque-Motor kann mit einem inkrementalen Messsystem ausgerüstet werden. Ferner können mechanische Klemmeinrichtungen und/oder Bremseinrichtungen vorgesehen werden, die im Arbeitstakt der Maschine betätigt werden und verhindern, dass sich der Drehteller während der Durchführung von Montagearbeiten an den Arbeitsstationen bewegen kann.

## Patentansprüche

1. Montagemaschine mit
einem Maschinengestell (1),
einer Mehrzahl von Arbeitsstationen (2), die auf einer an der Oberseite des Maschinengestells befestigten kreisförmigen Trägerplatte (3) angeordnet sind, und
einem taktweise rotierend angetriebenen Drehteller (4), der konzentrisch zur Trägerplatte (3) angeordnet ist,
wobei der Drehteller (4) am Umfang der Trägerplatte (3) vorsteht und eine die Trägerplatte (3) ringförmig umgebende Auflagefläche (5) für Werkstücke bildet, **dadurch gekennzeichnet, dass** das Maschinengestell (1) als Gussteil ausgebildet ist, welches einen tischförmigen Unterbau (6) und eine oberseitige Konsole (7) mit einer ringförmigen Montagefläche (8) für einen Drehtellerantrieb (9) aufweist, und dass der Drehtellerantrieb (9) als elektrischer Direktantrieb ausgebildet ist, der einen an der Montagefläche (8) befestigten ringförmigen Stator (10) mit elektrischen Wicklungen (11) und einen mit Permanent-Magneten (12) bestückten Rotor (13) aufweist, wobei der Rotor (13) einen Träger für den Drehteller (4) bildet und lösbar mit diesem verbunden ist.

2. Montagemaschine nach Anspruch 1, **dadurch gekennzeichnet, dass** der tischförmige Unterbau (6) des Gussteils zwei seitliche Wangen aufweist, die auf einer bodenseitigen Grundplatte (14) befestigt sind.

3. Montagemaschine nach Anspruch 1 oder 2, **dadurch gekennzeichnet, dass** das Gussteil fensterförmige Aussparungen enthält.

4. Montagemaschine nach einem der Ansprüche 1 bis 3, **dadurch gekennzeichnet, dass** auf dem tischförmigen Unterbau (6) eine Arbeitsplatte (15) zur Befestigung von Zusatz- und Zuführeinrichtungen angeordnet ist.

5. Montagemaschine nach einem der Ansprüche 1 bis 4, **dadurch gekennzeichnet, dass** die Trägerplatte (3) und der Drehteller (4) als Ringscheiben ausgebildet sind, dass innerhalb des tischförmigen Unterbaus (6) Antriebe und Steuereinrichtungen (16) zur Betätigung von Montagewerkzeugen in den Arbeitsstationen (2) angeordnet sind und dass Leitungen (17) zur Steuerung der Montagewerkzeuge durch den Freiraum der Trägerplatte (3) und des Drehtellers (4) zu den Arbeitsstationen (2) geführt sind.

6. Montagemaschine nach einem der Ansprüche 1 bis 5, **dadurch gekennzeichnet, dass** der Rotor (13) des Drehtellerantriebes (9) aus einem mit Permanent-Magneten (12) bestückten Lagerring eines an der Montagefläche (8) angeordneten Wälzlagers (18) besteht.

7. Montagemaschine nach Anspruch 6, **dadurch gekennzeichnet, dass** der Stator (10) als Außenring ausgebildet ist, an dessen innenseitiger Umfangsfläche die elektrischen Wicklungen (11) angeordnet sind, und dass der den Rotor (13) bildende Wälzlagerring Bestandteil eines innerhalb des Außenringes (10) und zu diesem konzentrisch auf der Montagefläche (8) angeordneten Wälzlagers (18) ist.

8. Montagemaschine nach Anspruch 7, **dadurch gekennzeichnet, dass** die Trägerplatte (3) für die Arbeitsstationen (2) auf dem fest auf der Montagefläche (8) angeordneten Innenring des Wälzlagers (18) aufliegt und an diesem befestigt ist.

9. Montagemaschine nach Anspruch 7 oder 8, **dadurch gekennzeichnet, dass** der Stator (10) von außen zugängliche Kühlkanäle (21) aufweist.

10. Montagemaschine nach einem der Ansprüche 7 bis 9, **dadurch gekennzeichnet, dass** am Außenring (10) eine Dichtung (20) angeordnet ist, die einen Spalt zwischen dem Stator (10) und dem Drehteller (4) abdichtet.

## Claims

1. An assembly machine with
a machine frame (1)
a multiplicity of workstations (2), which are arranged on a circular carrier plate (3) which is firmly affixed to the upper side of the machine frame, and
an indexed driven rotary plate (4) that is arranged concentrically with the carrier plate (3)
wherein the rotary plate (4) extends beyond the circumference of the carrier plate and forms a bearing surface (5) surrounding the carrier plate (3) in circular form,
**characterised in that**
the machine frame (1) is constructed as a cast part that has a substructure (6) in the form of a table and a mounting bracket (7) with an annular assembly surface (8) for a rotary plate drive (9), and that the rotary plate drive (9) is constructed as an electrical direct drive that has an annular stator (10) secured to the assembly surface (8) with electrical windings (11) and a rotor (13) equipped with permanent magnets (12), wherein the rotor (13) forms a support for the rotary plate (4) and is detachably connected therewith.

2. The assembly machine as cited in Claim 1,
**characterised in that**
the table-like substructure (6) of the cast part has two lateral walls, which are securely affixed to a base plate (14) at the base.

3. The assembly machine as cited in either of Claims 1 or 2,
**characterised in that**
the cast part includes window-like cut-aways.

4. The assembly machine as cited in any of Claims 1 to 3,
**characterised in that**
a work plate (15) is arranged on the table-like substructure (6) for securing accessory and feed apparatuses.

5. The assembly machine as cited in any of Claims 1 to 4,
**characterised in that**
the carrier plate (3) and the rotary plate (4) are constructed as annular discs, that drives and control devices (16) are arranged inside the table-like substructure (6) for actuating assembly tools in the work stations (2), and that wires for controlling the assembly tools are connected with the work stations (2) through the gap in the carrier plate (3) and the rotary plate (4).

6. The assembly machine as cited in any of Claims 1 to 5,
**characterised in that**
the rotor (13) of the rotary plate drive (9) is made from a bearing ring of a roller bearing (18) arranged on the assembly surface (8) fitted with a permanent magnet (12).

7. The assembly machine as cited in Claim 6,
**characterised in that**
the stator is constructed as an outer ring, on whose internal circumferential surface the electrical windings (11) are arranged, and that the roller bearing ring forming the rotor (13) is a component of a roller bearing (18) arranged inside the outer ring (10) and concentrically therewith on the assembly surface (8).

8. The assembly machine as cited in Claim 7,
**characterised in that**
the carrier plate (3) for the work stations (2) is supported on the inner ring of the roller bearing (18) arranged in fixed manner on the assembly surface (8) and is securely attached thereto.

9. The assembly machine as cited in either of Claims 7 or 8,
**characterised in that**
the stator (10) is furnished with coolant bores (21) that are accessible from the outside.

10. The assembly machine as cited in any of Claims 7 to 9,
**characterised in that**
a gasket (20) is arranged on the outer ring (10) and seals a gap between the stator (10) and the rotary plate (4).

## Revendications

1. Machine de montage possédant
un châssis de machine (1),
une pluralité de stations de travail (2) qui sont disposées sur une plaque support (3) circulaire fixée sur le côté supérieur du châssis de machine, et
un plateau tournant (4) entraîné en rotation par cycle qui est disposé de manière concentrique par rapport à la plaque support (3),
le plateau tournant (4) dépassant à la périphérie de la plaque support (3) et formant une surface d'appui (5) entourant de manière annulaire la plaque support (3) pour des pièces à usiner, **caractérisée en ce que** le châssis de machine (1) est réalisé en tant que pièce moulée en fonte qui présente une infrastructure (6) en forme de table et une console supérieure (7) avec une surface de montage annulaire (8) pour un entraînement de plateau tournant (9), et **en ce que** l'entraînement de plateau tournant (9) est réalisé en tant qu'entraînement direct électrique qui présente un stator (10) annulaire fixé à la surface de montage (8) avec des bobines électriques (11) et un rotor (13) équipé d'aimants permanents (12), le rotor (13) formant un support pour le plateau tournant (4) et étant relié de manière amovible à celui-ci.

2. Machine de montage selon la revendication 1, **caractérisée en ce que** l'infrastructure (6) en forme de table de la pièce moulée en fonte présente deux faces latérales qui sont fixées à une plaque de base (14) du côté du sol.

3. Machine de montage selon la revendication 1 ou 2, **caractérisée en ce que** la pièce moulée en fonte contient des évidements en forme de fenêtre.

4. Machine de montage selon l'une quelconque des revendications 1 à 3, **caractérisée en ce qu'**une plaque de travail (15) est disposée sur l'infrastructure (6) en forme de table en vue de la fixation de dispositifs supplémentaires et d'amenée.

5. Machine de montage selon l'une quelconque des revendications 1 à 4, **caractérisée en ce que** la plaque support (3) et le plateau tournant (4) sont réalisés en tant que disques annulaires, **en ce qu'**à l'intérieur de l'infrastructure (6) en forme de table sont disposés des entraînements et des dispositifs de commande (16) en vue de l'actionnement d'outils de montage dans les stations de travail (2) et **en ce que** des conduites (17) en vue de la commande des outils de montage sont guidées à travers l'espace libre de la plaque support (3) et du plateau tournant (4) vers les stations de travail (2).

6. Machine de montage selon l'une quelconque des revendications 1 à 5, **caractérisée en ce que** le rotor (13) de l'entraînement de plateau tournant (9) se compose d'un anneau de palier équipé d'aimants permanents (12) d'un palier de roulement (18) disposé sur la surface de montage (8).

7. Machine de montage selon la revendication 6, **caractérisée en ce que** le stator (10) est réalisé en tant qu'anneau extérieur sur la surface périphérique interne duquel les bobines électriques (11) sont disposées et **en ce que** l'anneau de palier de roulement formant le rotor (13) fait partie d'un palier de roulement (18) disposé à l'intérieur de l'anneau extérieur (10) et de manière concentrique à celui-ci sur la surface de montage (8).

8. Machine de montage selon la revendication 7, **caractérisée en ce que** la plaque support (3) pour les stations de travail (2) repose sur l'anneau intérieur du palier de roulement (18) disposé fixement sur la surface de montage (8) et est fixée sur celui-ci.

9. Machine de montage selon la revendication 7 ou 8, **caractérisée en ce que** le stator (10) présente des canaux de refroidissement (21) accessibles de l'extérieur.

10. Machine de montage selon l'une quelconque des revendications 7 à 9, **caractérisée en ce qu'**un joint (20) qui étanchéifie une fente entre le stator (10) et le plateau tournant (4) est disposé sur l'anneau extérieur (10).
